# EUROPEAN PATENT APPLICATION

(11) **EP 4 632 716 A1**
(43) Date of publication of application: **15.10.2025**
(21) Application number: 24208389.7
(22) Date of filing: 23.10.2024
(51) Int. Cl.: G09B 23/28

(54) **LAPAROSCOPIC FORCE TRAINING METHOD AND SYSTEM**

(30) Priority: 11.04.2024 EP 24169812
(71) Applicant: Doktersvennootschap Koninckx, 3360 Bierbeek (BE)
(72) Inventor: KONINCKX, Philippe, 3360 Bierbeek (BE); ROMEO, Armando, 10146 Torino (IT)
(74) Representative: Winger

(57) **Abstract**

A system for training or performing laparoscopic surgery includes a device for determining forces exerted between parts of one or more laparoscopic tools and an indicator means for indicating determined forces exerted between interacting parts to a user. This system is designed to enhance the surgical training process by providing real-time feedback on the forces applied during surgery, thereby aiding in the development of the necessary skills for precise and safe surgical operations. The system may also include a processor for instructing a user to perform a series of specific exercises, which can vary in difficulty, to monitor and estimate individual learning curves, and to teach estimation of the forces exerted.

## Description

### Field of the Invention

The present invention relates to the field of medical training devices, specifically to systems and methods for measuring, teaching, and training the estimation and application of forces used with laparoscopic surgical instruments.

### Background of the Invention

In the realm of surgical procedures, the evolution from open surgery to laparoscopic or endoscopic surgery has marked a significant advancement, offering benefits such as reduced recovery times and minimized surgical trauma. This transition, however, introduces a set of challenges that are distinct from those encountered in traditional open surgery. One of the primary challenges in laparoscopic surgery is the reliance on indirect vision through a camera and screen setup, replacing the direct line of sight available in open surgery. This shift necessitates a reliance on two-dimensional images to navigate three-dimensional spaces, complicating depth perception and spatial orientation. The inherent delay, albeit minimal, between the surgeon's movements and their visualization on the screen further complicates this issue, requiring a high degree of adaptation and skill.

Moreover, the instruments used in laparoscopic surgery are significantly longer and more rudimentary than those used in open surgery, designed to fit through small incisions while maintaining the necessary strength for surgical tasks. These instruments articulate at the abdominal wall, creating a pivot point that varies with the depth of the operation. This variation affects the movement and force exertion at the instrument's tip, often resulting in movements that are counterintuitive to the surgeon's hand movements. The combination of these factors necessitates a unique set of skills for effective hand-eye coordination, particularly for the non-dominant hand, and a precise understanding of the forces applied during surgery to avoid tissue damage and ensure proper tissue repair.

The need for specialized training to address these challenges has been recognized since the advent of laparoscopic surgery. Traditional training methods, however, have largely been adapted from those used for open surgery, with less emphasis on the unique aspects of laparoscopic techniques, such as the altered perception of force and three-dimensional spatial orientation. While basic training in hand-eye coordination, stitching, and knot tying has been introduced, there remains a gap in training specifically designed to address the nuances of force application and depth perception in laparoscopic surgery.

Furthermore, the importance of understanding and controlling the forces applied during surgical procedures cannot be overstated. Incorrect force application can lead to tissue damage, postoperative complications, and insecure surgical knots, which can have serious consequences for patient outcomes. Despite the advancements in training and technology, there is still a significant need for further developments in the field to address these challenges effectively.

### Summary of the Invention

It is an object of embodiments of the present invention to enhance a surgeon's skill development by providing a conscious awareness of the forces exerted during laparoscopic surgery tasks such as grasping, dissecting, stitching, and knot-tying. This objective is accomplished by a system for training or performing laparoscopic surgery according to the invention.

In the first aspect, the present invention relates to a system for training or performing laparoscopic surgery, the system comprising a device for determining forces exerted between parts of one or more laparoscopic tools, and an indicator means for indicating determined forces exerted between interacting parts to a user. This allows for conscious awareness of the forces exerted during laparoscopic procedures.

In embodiments, the system may comprise a processor for instructing a user to perform a series of specific exercises. This provides structured training.

In embodiments, the series of specific exercises may be a series of exercises with progressively increasing difficulty. This allows for gradual skill development.

In embodiments, the processor may be configured for monitoring and/or estimating individual learning curves. This enables personalized training.

In embodiments, the processor may be configured for teaching estimation of the forces exerted. This develops the surgeon's intuitive sense of force.

In embodiments, the indicator means may comprise a visual, auditive and/or haptic means for training hand-eye coordination when using a screen during laparoscopic surgery. This trains the surgeon to work with the altered visual feedback in laparoscopy.

In embodiments, the system may furthermore comprise a component representing a body component allowing the user for in vitro training. This provides realistic practice.

In embodiments, the device for determining forces exerted between parts of one or more laparoscopic tools may be a pressure transducer. This enables accurate force measurement.

In embodiments, the device for determining forces may be a device for determining forces exerted between interacting parts of a laparoscopic tool. This allows training tool manipulation forces.

In embodiments, the one or more laparoscopic tools may comprise at least one laparoscopic grasper. Graspers are commonly used tools that require precise force control.

In embodiments, the laparoscopic tool may be a laparoscopic grasper with a variable length of jaws. This allows practicing with different grasper configurations.

In embodiments, the length of jaws may be between 0.5cm and 5cm. This covers the typical range of grasper jaw lengths.

In embodiments, the laparoscopic grasper may be an instrument with a variable lever between a handle and jaws thereof. This simulates the varying mechanical advantage in laparoscopic tools.

In embodiments, the device for determining forces may be a device for determining forces exerted between the tip of two medical tools when distending or compressing the two medical tools. This allows training two-handed manipulation forces.

In embodiments, the device for determining forces may be a device for determining both deliberate and inadvertent forces during various exercises with one or more laparoscopic tools.

Measuring unintended forces helps refine motor control.

In embodiments, the system may comprise a configuration of two elements, e.g. plates, and a variable spring positioned in between the elements for measuring forces required for bringing the elements closer to each other or to remove the elements from each other. This provides a simple force measurement setup.

In embodiments, the system may comprise an element and be configured for determining forces exerted on the element in a first direction and a second direction, the second direction being substantially non-parallel to the first direction. This allows measuring forces in multiple degrees of freedom.

In the second aspect, the present invention relates to a method for training or performing laparoscopic surgery, the method comprising allowing a user to manipulate parts of one or more laparoscopic tools, determining forces exerted between said parts of one or more laparoscopic tools, and indicating the determined forces exerted between interacting parts to a user. This provides real- time feedback during laparoscopic training.

In embodiments, the method may comprise instructing a user to perform a series of specific exercises. This provides a standardized training curriculum.

In embodiments, said instructing may comprise instructing the user to perform a series of exercises with progressively increasing difficulty. This facilitates step-wise skill acquisition.

In embodiments, the method may comprise monitoring and/or estimating individual learning curves. This allows tracking trainee progress.

In embodiments, the method may comprise teaching estimation of the forces exerted. This trains the surgeon's ability to gauge forces.

In embodiments, indicating may comprise providing a visual, auditive and/or haptic indication for training hand-eye coordination when using a screen during laparoscopic surgery. Multimodal feedback enhances learning.

In embodiments, the method may provide in vitro training for the user. This avoids training on live patients.

In embodiments, the method may train the user by requesting the user to use a series of specific pressures when using one or more laparoscopic tools, the method indicating a deviation between the specific pressure requested and the actual pressure used. This teaches precise force application.

In embodiments, the method may train the user by requesting to perform grasping or moving an object without exercising a force larger than a predetermined value. This trains gentle tissue handling.

In embodiments, the method may comprise training the user to feel the forces needed to approximate or remove an object or to open or close a tool, considering a variable insertion of the tool through the abdomen. This develops an intuitive understanding of the varying lever arms.

In embodiments, the method may comprise measuring intended and non-intended forces exerted, e.g. when suturing or tying knots. This identifies and helps correct undesirable movements.

It is an advantage of embodiments of the present invention that a surgeon's skill development is enhanced by fostering a conscious awareness of the forces exerted during surgical procedures such as grasping, dissecting, stitching, and knot-tying. It is a further advantage of embodiments of the present invention that the risk of destabilizing knots during knot-tying is mitigated, leading to improved knot security and reducing the likelihood of dangerously low knot security. Additionally, it is an advantage of embodiments of the present invention that the training of the feeling of forces exerted with surgical instruments is facilitated, allowing for more precise control and potentially reducing the incidence of complications associated with insecure knots. It is also an advantage of embodiments of the present invention that minimal nerve damage and reduced damage to the peritoneal cavity are achieved, leading to minimal adhesion formation post-surgery. Moreover, it is an advantage of embodiments of the present invention that the instruments developed for this purpose are capable of measuring both intentional and unintentional forces during various exercises with laparoscopic instruments, thereby enhancing the training of hand-eye coordination when working on a screen. This comprehensive approach to measuring and training to feel the forces exerted with surgical instruments before surgery is designed to enable surgery with fewer complications, highlighting the significant benefits of the present invention in improving surgical outcomes and patient safety.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description. This description is given for the sake of example only, without limiting the scope of the invention.

### Short description of the drawings

FIG. 1 illustrates an exemplary force sensor being a first instrument according to an embodiment of the present invention.
FIG. 2 illustrates a second and third instrument according to embodiments of the present invention.
FIG. 3 and FIG. 4 illustrate measuring forces applied when closing or opening legs of the second respectively third instrument using two laparoscopic graspers according to embodiments of the present invention.
FIG. 5 illustrates a suturing pad allowing regjstration of vertical and horizontal forces, as can be used in embodiments according to the present invention.
FIG. 6 illustrates a simplified dynamometer for checking knot security, as can be used in embodiments according to the present invention.

In the different figures, the same reference signs refer to the same or analogous elements.

### Detailed description of Illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The terms first, second, third and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.

Moreover, the terms top and over and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", also used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be interpreted as being limited to devices consisting only of components A and B. It means that with respect to the present invention, the only relevant components of the device are A and B. The term "comprising" therefore covers the situation where only the stated features are present and the situation where these features and one or more other features are present. The word "comprising" according to the invention therefore also includes as one embodiment that no further components are present. When the word "comprising" is used to describe an embodiment in this application, it is to be understood that an alternative version of thesame embodiment, wherein the term "comprising" is replaced by "consisting of", is also encompassed within the scope of the present invention.

Similarly, it is to be noticed that the term "coupled" should not be interpreted as being restricted to direct connections only. The terms "coupled" and "connected", along with their derivatives, may be used. It should be understood that these terms are not intended as synonyms for each other. Thus, the scope of the expression "a device A coupled to a device B" should not be limited to devices or systems wherein an output of device A is directly connected to an input of device B. It means that there exists a path between an output of A and an input of B which may be a path including other devices or means. "Coupled" may mean that two or more elements are either in direct physical or electrical contact, or that two or more elements are not in direct contact with each other but yet still co-operate or interact with each other.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

Furthermore, some of the embodiments are described herein as a method or combination of elements of a method that can be implemented by a processor of a computer system or by other means of carrying out the function. Thus, a processor with the necessary instructions for carrying out such a method or element of a method forms a means for carrying out the method or element of a method. Furthermore, an element described herein of an apparatus embodiment is an example of a means for carrying out the function performed by the element for the purpose of carrying out the invention.

In the description provided herein, numerous specific details are set forth. However, it is understood that embodiments of the invention may be practiced without these specific details. In other instances, well-known methods, structures and techniques have not been shown in detail in order not to obscure an understanding of this description.

The following terms are provided solely to aid in the understanding of the invention.

As used herein, and unless otherwise specified, the term "laparoscopic tools" refers to surgical instruments specifically designed for use in laparoscopic procedures, including but not limited to laparoscopic graspers, scissors, dissectors, retractors, and needle holders.

As used herein, and unless otherwise specified, the term "indicator means" refers to any device or method capable of conveying information about the determined forces to the user, such as visual displays, auditory feedback, or haptic feedback systems.

As used herein, and unless otherwise specified, the term "processor" refers to any computing device, such as a computer, microcontroller, or embedded system, capable of executing instructions to guide the user through exercises and monitor performance.

As used herein, and unless otherwise specified, the term "hand-eye coordination" refers to the ability to synchronize visual input with hand movements, a critical skill in laparoscopic surgery where the surgeon must manipulate tools while watching a screen.

As used herein, and unless otherwise specified, the term "in vitro training" refers to practice or simulation of surgical techniques outside of a living body, such as on training models or virtual reality systems.

As used herein, and unless otherwise specified, the term "pressure transducer" refers to a sensor capable of converting pressure or force into an electrical signal that can be measured and processed.

As used herein, and unless otherwise specified, the term "variable length of jaws" refers to the ability to adjust the length of the grasping portion of a laparoscopic tool, typically ranging from 0.5cm to 5cm, to accommodate different surgical tasks and patient anatomies. As used herein, and unless otherwise specified, the term "variable lever" refers to the ability to adjust the mechanical advantage between the handle and jaws of a laparoscopic tool, allowing the user to change the force required to open and close the jaws.

As used herein, and unless otherwise specified, the term "deliberate and inadvertent forces" refers to both intentional and unintentional forces applied by the user during surgical tasks, which the system can measure and provide feedback on to improve technique and minimize tissue damage.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

In the first aspect, the present invention relates to a system for training or performing laparoscopic surgery, the system comprising a device for determining forces exerted between parts of one or more laparoscopic tools, and an indicator means for indicating determined forces exerted between interacting parts to a user. This allows for conscious awareness of the forces exerted during laparoscopic procedures. In some embodiments, the system may comprise a processor for instructing a user to perform a series of specific exercises. Such a processor may be a general processor comprising particular instructions implemented thereon, in other embodiments, this may be a specific processor. The processor may be configured for monitoring and/or estimating individual learning curves.

In some embodiments, the the indicator means comprises a visual, auditive and/or haptic means for training hand-eye coordination when using a screen during laparoscopic surgery. The system furthermore may comprise a component representing a body component allowing the user for in vitro training. The device for determining forces exerted between parts of one or more laparoscopic tools may comprise a pressure transducer. By way of illustration, some examples will be discussed further in the description. The one or more laparoscopic tools may comprise for example at least one laparoscopic grasper. The laparoscopic tool may be a laparoscopic grasper with a variable length of jaws or a variable lever between a handle and jaws thereof.

According to some embodiments, the system may comprise a configuration of two elements, e.g. plates, and a variable spring positioned in between the elements for measuring forces required for bringing the elements closer to each other or to remove the elements from each other. The device for determining forces may be or comprise a device for determining forces exerted between the tip of two medical tools when distending or compressing the two medical tools. The device for determining forces may also be or comprise a device for determining both deliberate and inadvertent forces during various exercises with one or more laparoscopic tools. The system may comprise an element and being configured for determining forces exerted on the element in a first direction and a second direction, the second direction being substantially non-parallel to the first direction.

By way of illustration, embodiments of the present invention not being limited thereto, some exemplary standard and/or optional features and advantages of some embodiments of the present invention are illustrated below.

A surgeon's skill development improves by having a conscious awareness of the forces he exerts when grasping, dissecting, stitching and knot-tying. He also needs awareness of the risk of destabilizing knots during knot-tying, resulting in dangerously low knot security. To train these aspects, a series of instruments was developed permitting training the feeling of forces exerted and measuring forces, e.g. inadvertent forces, exerted.

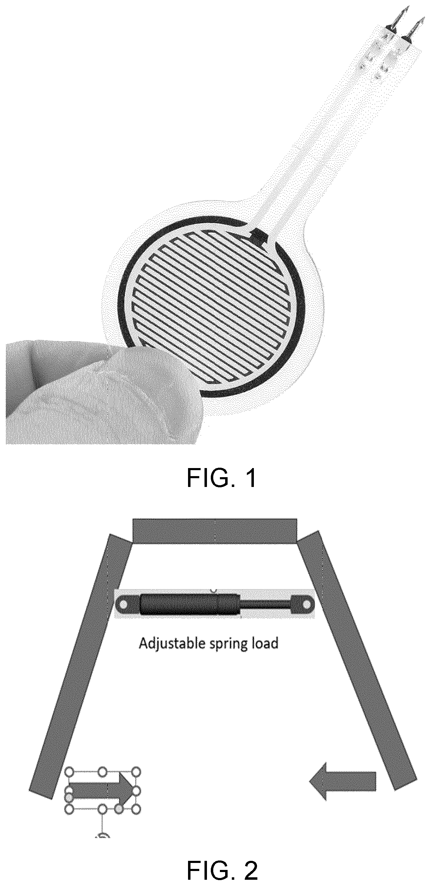

A pressure transducer for predetermined pressure values, e.g. pressure values between 5N to 100N, is shown in FIG. 1. It measures the pressure e.g. a grasper exerts and indicates the pressure exerted (N). This permits training to get a correct feeling of the pressure exerted between the jaws of grasper instruments as used in open and laparoscopic surgery, with variable levers between the forces exerted by the hand on the handle and the forces obtained at the tip of the jaws of the grasper with variable length of jaws. The pressure transducer may for example be a flat force sensor which is mounted in a flexible housing, permitting force measurement and registration and permitting the outputting of the force, e.g. on a display. This pressure transducer may for example be comparable to a 2 euro piece with central elevation enabling to exert force with graspers with different levers because of the variable length of the jaws, shaft or handle size. The surgeon needs to get an approximate 'feeling' of the forces he uses to prevent using excessive force during manipulation. Whereas one example of a pressure transducer is shown in FIG. 1, embodiments of the present invention are not limited thereto and also other types of pressure transducers may be used. In one embodiment, the flat force sensor may have a diameter of about 2cm, placed in a plastic or metallic housing which measures the pressure when grasping. The signal can be displayed on a screen, eventually wireless. The force sensing in such a sensor typically converts a distance into a force or pressure applied. A force/pressure monitoring display module may be used and corresponding values may be outputted via a pressure digital display.

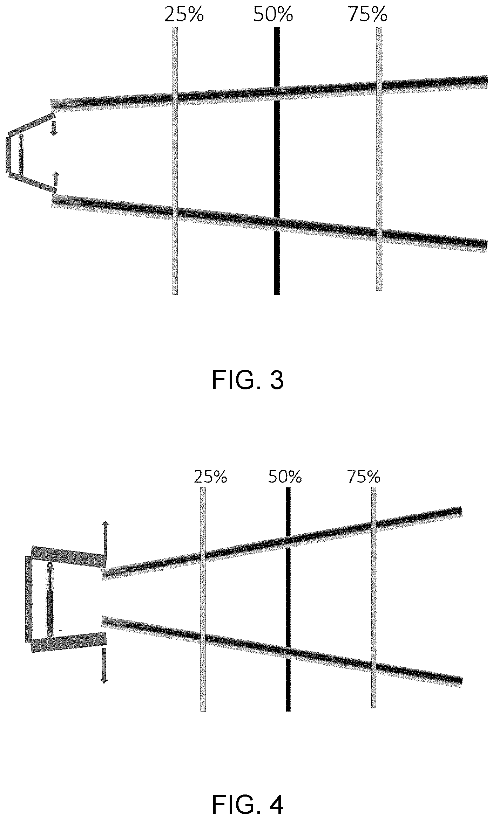

FIG. 2 is a schematic illustration of a second and third device that can be used for measuring and training forces to be applied. The second device corresponding with a device for measuring and training forces for closing arms of the device, the third device corresponding with a device for measuring and training forces for opening arms of the device. FIG. 2 illustrates two arms of a force measuring device, connected with a variable spring and allowing measuring increasing forces needed for closing respectively opening the arms of a medical system. According to one example, such a device may comprise two plates with in between a variable spring permitting to measure the increasing forces needed to approximate the plates, e.g. between 1N to 100N, e.g. between 5N to 100N. Such instruments will permit teaching the estimation of the forces exerted between the tip of 2 laparoscopic instruments, when the rotation point of the instruments varies from the proximal to the distal part of the instrument, i.e. with variable levers. The latter is illustrated in FIG. 3, wherein measurement is performed of the forces required to close the second device with 2 graspers inserted over 25%, 50% or 75% of the length. In FIG. 4, alternatively measuring the forces for opening the device with 2 graspers inserted 25%, 50% or 75% of the length is illustrated. This will permit teaching the estimation of the forces exerted between the tip of 2 laparoscopic instruments, when the rotation point of the instruments varies from the proximal to the distal part of the instrument, i.e. with variable levers.

According to some embodiments, the second and third device may comprise two plates with in between a variable spring, permitting to measure the increasing forces to open the plates, between 5 to 100 N. In one example, these devices may comprise two lateral plates of for example 5*3 cm² articulate on a base plate of 5*3cm². The former may be designed to measure progressively increasing forces with a progressive spring when closing or opening the 2 lateral plates with 2 laparoscopic instruments.

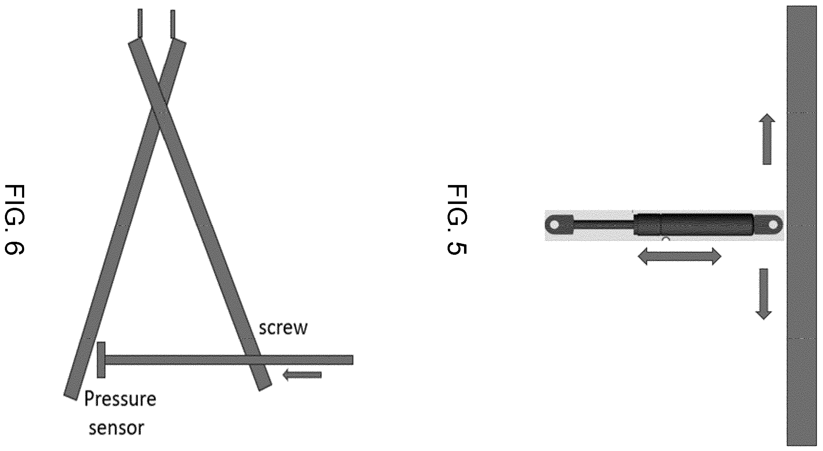

According to some embodiments, a fourth device may be used comprising a platform permitting measurement of the forces exerted on the platform in vertical and horizontal directions. This will permit registration of the intended and non-intended forces and, thus of the stability and precision of hand movements during a series of specific exercises. An example thereof is shown in FIG. 5.

According to some other embodiments, a fifth device may comprise a simple mechanical device that will permit to estimate the forces between the tips when opening , permitting to estimate knot security. The simple mechanical device may be referred to as a simplified dynamometer, allowing checking knot security. The sharp ends of the device are inserted in the knot and opened with progressive force. An example thereof is shown in FIG. 6.

According to some embodiments of the present invention, one or more of the above instruments may be used in a series of specific training exercises.

The first instrument may be used to train the feeling of pressure used with instruments as graspers, and the learning will be estimated by asking them to use a series of specific pressures, e.g. 10, 30, 60 and 100 N and to measure the error. Training will be continued till the learning curves show sufficient precision. Subsequently, graspers with different levers, i.e. length of jaws and size of handles, will be trained. Finally, exercises in a pelvic trainer will train grasping and moving objects without exercising more than a specific force such as 5 N. The aim of these exercises is to teach a mental awareness of the forces exerted, to manipulate objects with a specific force, and to measure each individual's learning curve.

The second instrument may in some embodiments be used to train the feeling of the forces needed to approximate or close the device, considering the variable insertion of the instruments through the abdomen. The learning curve will be estimated by asking them to use a series of specific pressures, e.g. 10, 30, 60 and 100 N, with the tip of the instruments inserted 1/4th, halt or 3/4th and to measure the error. The third instrument is the mirror image of instrument 2, and may in some embodiments be used for measuring the opening forces exerted by the tip of the instruments.

Another device, above referred to as the fourth device, may in some embodiments be used for measuring the intended and non-intended forces exerted when suturing or tying knots, reflecting the hand stability and precision. Besides the forces needed to introduce and rotate a needle and tie a knot, a series of non-intended forces occur. Besides rotating the needle, unnecessary vertical and lateral forces often occur. Also, during knot tying, variable vertical or lateral traction occurs, risking to destabilize half-knots, resulting in insecure or dangerous knots. An example of such an instrument may be a working plate with multiple, e.g. 3 or 6, pressure transducers measuring the vertical and the left-right and anterior-posterior forces exerted on the working plate. These forces may be registered continuously for a period of time, e.g. 1 to 5 minutes, and may be visualized for example on an oscilloscope. A schematic of such a platform is shown in FIG. 5. Needle insertion and rotation may for example be measured in some embodiments with a large and small standard needle, and the learning curve will be established. Hand stability will be measured during knot tying of a traditional surgical knot (H2H1sH1s) and a long suture till sufficient stability is obtained. Subsequently, the more difficult H3H2 knot will be exercised, and finally, the same exercises will be performed with shorter sutures, permitting less lateral movements.

The fifth device may for example be a simplified and affordable tensiometer, which in some embodiments may be used for permitting to evaluate individually knot securities between 10 and 150 N, but with less accuracy. It is sufficient to distinguish dangerous (<10N) and insecure (10-30 N) knots from secure knots that break the tread. This permits the trainee to assess a series of knots he made without the hassle of detaching and mounting on the hooks of a tensiometer. He, moreover, directly observes the eventual initial slipping by a few mm. This device may be used to evaluate the percentage of dangerous and insecure surgical knots (H2H1sH1s). Gaining precision and hand stability dangerous knots should drop to 0 from >5% initially and the insecure knots to less than 5% from initially some 50%. The fifth instrument may be a strong instrument designed to open the jaws while measuring the forces needed. The embodiment is less important as long as the tips are small and strong, permitting them to be inserted into a knot and a measure of the forces needed to open or break the knot. Considering a lever of 10, the forces to be measured are between 0 and 15 N.

One or more of these instruments may be complementary for teaching and measuring the learning curves of basic skills for endoscopic surgery, using the principles of sports and music education. They may allow to teach the basic movements till the brain connections have sufficiently developed to move to the next step. Basic training needs a continuous awareness of the forces used, similar to using the right fingers when learning to play the piano, since these are fundamental for tissue damage when grasping, knot tying without strangulation, nerve dissection, securing knots, etc. Each exercise will be performed while registering the individual learning curve. These graphs will permit training specifically weak points such as left-hand suturing or bimanual knot tying.

In some embodiments, one or more of these instruments may be used for training loop security forces. Two Flat areas are kept separated with a variable spring measuring increasing forces when bringing the 2 arms together. This may in some embodiments be used with two laparoscopic graspers inserted for 50% (= proportional force), or for 25% or deeper for 75%. The forces at the end of the rasper thus will be similar to or half or twice the forces exerted on the handle. The forces needed are between 0 and 50 N .

In some embodiments, one or more of these instruments may be used to train forces during dissection and knot-tying. The third instrument is the mirror image of the second instrument designed to train the forces when opening the instrument with the tip of 2 laparoscopic instruments, or during 2 hand dissection and knot tying when pulling both ends.

In some embodiments, one or more of these instruments may be used to measure inadvertent forces exerted during knot tying ( risking destabilizing half-knots resulting in insecure knots.) The suture pad is mounted with 4 pressure sensors permitting measuring the vertical traction or pressure and the left-right and anterior-posterior forces during suturing and knot tying. Forces may range between 0 and 100N.

In some embodiments, one or more of these instruments may be used to evaluate knot security. The 2 sharp ends are inserted into the knot. Opening progressively with a screw, the pressure increases, measuring the breaking or opening pressure of the knot. Forces ranges are between 0 and 150 Newton.

The forces used in surgery vary with the surgeon, some being delicate, others much less. In open surgery, there was some direct feeling of forces used, but in laparoscopic surgery, most surgeons have little conscious knowledge of the forces they use at the tip of a 30 cm long instrument articulating at a variable place of the shaft. The articulation varies when surgery is superficial, e.g. an oviduct 5 cm from the wall or deep in the pelvis at 20 cm or more.

According to experiments performed, the first instrument teaching pressures exerted with a grasper provides a series of benefits when doing surgery. For example, forces should be less than 5N to avoid nerve damage. Only using the minimal forces needed when grasping is important for gentle tissue handling- excessive forces of grasping result in unnecessary mesothelial damage and adhesion formation. Feeling forces will facilitate the positioning of the needle in a needle holder, a well-known difficulty: with too much force, the needle does not rotate; with not enough force, the needle rotates freely.

According to experiments performed, the second and third instrument teach to feel the forces obtained at the tip of 2 instruments inserted at variable depths. Without training, this is difficult to estimate. The benefits when subsequently doing surgery can be illustrated with examples. When closing structures with tension, such as a uterus after a myomectomy or in ortopedic surgery, judging the forces needed to approximate is essential for choosing the right suture diameter and the knot sequences for loop and knot security and to avoid poor approximation and poor knots that are not leak-proof. Having developed an accurate feeling for these forces permit documentation of the loop security and the knot security needed for suturing different tissues such as the vaginal cuff, bowels, uterine artery or the mesh after promontofixation. It also will permit the surgeon to estimate the tensions during a bowel or ureter reanastomosis known to be critical for the type of surgery to be performed. This feeling of forces is important to judge the forces when dissecting and when tying knots. With small sutures such as a 5.0, the tying forces should be less than the tensile strength around 30 N. Excessive force results in breaking sutures and surgeons using unnecessary large sutures and, thus, more foreign material and adhesion formation.

According to experiments performed, the fourth instrument measures the precision of movement and thus indirectly hand stability and hand-eye coordination during stitching, which varies from a pure rotation to pressure without rotation, and measures the involuntary forces used during knot tying, destabilizing knots and resulting in dangerous or insecure knots. Indirectly these exercises, performed at several depths, will estimate and improve precision and awareness of precision of movements during surgery. The importance can be illustrated with examples. As observed during experiments and live surgery, the risk of making dangerous and insecure knots is much higher than estimated before. This not only applies to trainees but also to expert surgeons. These insecure knots have been considered as 'unpredictable behaviour of knots', resulting in unfortunate and unpredictable accidents postoperatively and using sutures with excessive diameter. Erratic movements also result in accidents with lasers and electrosurgery. Therefore it is important that each surgeon can estimate the security of his knots in vitro and visualize his inadvertent movements and destabilizing tractions when tying knots, especially when sutures are short and when using half-knot combinations.

Besides the notion of forces needed, these exercises emphasise the principle of training separately simple movements, such as square knot tying, rabbit nephrectom, and non-dominant hand training, principles also adopted by the GESEA training.

According to some embodiments training grasping forces in laparoscopy is obtained. According to some embodiments training forces needed for approximating tissues in laparoscopy is obtained.

According to some embodiments, training forces needed to dissect tissues or to tie knots in laparoscopy is obtained.

According to some embodiments, prevention of dangerous and insecure knots by measuring knots and by measuring inadvertent movements is obtained.

According to some embodiments, more gentle tissue handling with less postoperative adhesion formation is obtained.

According to some embodiments, prevention of nerve damage when grasping nerves is obtained.

According to some embodiments, understanding knot tying and knot security will result in thinner sutures, with tails being cut shorter with less inflammatory reaction and less adhesion formation.

According to some embodiments, understanding the forces needed for approximation will permit us to choose the right knot combination for loop security and, ultimately, secure knots.

In a second aspect, the present invention relates to a method for training or performing laparoscopic surgery, the method comprising allowing a user to manipulate parts of one or more laparoscopic tools, determining forces exerted between said parts of one or more laparoscopic tools, and indicating the determined forces exerted between interacting parts to a user. This provides real-time feedback during laparoscopic training.

The method may comprise teaching estimation of the forces exerted. The method also may be a method providing in vitro training for the user.

It is to be understood that although preferred embodiments, specific constructions and configurations, as well as materials, have been discussed herein for devices according to the present invention, various changes or modifications in form and detail may be made without departing from the scope of this invention.

## Claims

1. A system for training or performing laparoscopic surgery, the system comprising a device for determining forces exerted between parts of one or more laparoscopic tools, and an indicator means for indicating determined forces exerted between interacting parts to a user.

2. A system according to any of the previous claims, wherein the system comprises a processor for instructing a user to perform a series of specific exercises.

3. A system according to the previous claim, wherein the processor is configured for monitoring and/or estimating individual learning curves.

4. A system according to any of the previous claims, wherein the indicator means comprises a visual, auditive and/or haptic means for training hand-eye coordination when using a screen during laparoscopic surgery.

5. A system according to any of the previous claims, wherein the system furthermore comprises a component representing a body component allowing the user for in vitro training.

6. A system according to any of the previous claims, wherein the device for determining forces exerted between parts of one or more laparoscopic tools comprises a pressure transducer.

7. A system according to any of the previous claims, wherein the one or more laparoscopic tools comprise at least one laparoscopic grasper.

8. A system according to the previous claim, wherein the laparoscopic tool is a laparoscopic grasper with a variable length of jaws or a variable lever between a handle and jaws thereof.

9. A system according to any of the previous claims, wherein the system comprises a configuration of two elements, e.g. plates, and a variable spring positioned in between the elements for measuring forces required for bringing the elements closer to each other or to remove the elements from each other.

10. A system according to any of the previous claims, wherein the device for determining forces is a device for determining forces exerted between the tip of two medical tools when distending or compressing the two medical tools.

11. A system according to any of the previous claims, wherein the device for determining forces is a device for determining both deliberate and inadvertent forces during various exercises with one or more laparoscopic tools.

12. A system according to any of the previous claims, the system comprising an element and being configured for determining forces exerted on the element in a first direction and a second direction, the second direction being substantially non-parallel to the first direction.

13. A method for training or performing laparoscopic surgery, the method comprising
- allowing a user to manipulate parts of one or more laparoscopic tools
- determining forces exerted between said parts of one or more laparoscopic tools, and
- indicating the determined forces exerted between interacting parts to a user.

14. A method according to claim 13, the method comprising teaching estimation of the forces exerted.

15. A method according to any of claims 13 to 14, the method providing in vitro training for the user.
